# EUROPEAN PATENT SPECIFICATION

(11) **EP 3 654 410 B1**
(45) Date of publication and mention of the grant of the patent: **10.08.2022**
(21) Application number: 18206144.0
(22) Date of filing: 14.11.2018
(51) Int. Cl.: H01M 50/20, H01M 10/04

(54) **BUSBAR FOR A BATTERY MODULE AND BATTERY MODULE**
STROMSCHIENE FÜR EIN BATTERIEMODUL SOWIE BATTERIEMODUL
BARRE OMNIBUS POUR UN MODULE DE BATTERIE ET MODULE DE BATTERIE

(43) Date of publication of application: 20.05.2020
(73) Proprietor: Samsung SDI Co., Ltd., Gyeonggi-do 17084 (KR)
(72) Inventor: Golubkov, Andrej, 8010 Graz (AT)
(74) Representative: Gulde & Partner

(56) References cited:
- EP-A1- 2 713 423
- WO-A1-2017/054186
- CN-A- 105 428 580
- DE-A1-102010 019 708
- DE-A1-102012 204 591
- US-A1- 2010 021 810

## Description

### Field of the Invention

The present invention relates to a busbar for a battery module, particularly to a low-height, flexible busbar for a compact battery module. The invention further relates to a battery module, particularly to a battery module comprising such low-height and flexible busbars.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric or hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs, each battery cell is coupled to a common current collector structure and a common battery management system. In modular designs, pluralities of battery cells are connected to form submodules and several submodules are connected to form the battery module. Battery management functions may be realized either on module or submodule level and thus interchangeability of the components is improved. One or more battery modules are mechanically and electrically integrated, equipped with a thermal management system and set up for communication with one or more electric consumers for forming a battery system.

To provide electrical integration of a battery system in modular designs either submodules with a plurality of cells connected in parallel are connected in series *(XsYp)* or submodules with a plurality of cells connected in series are connected in parallel *(XpYs). XsYp* type submodules can generate high voltages and *XpYs* type submodules the capacitance of the cells add up and thus *XpYs* type submodules are mostly used for low capacitance cells.

For electrically interconnecting the battery cells and/or battery submodules of a battery module, the latter usually comprises a plurality of busbars. These busbars may be further configured to be connected to the battery module terminals for allowing the supply of external loads with the current provided by the battery module. Therein, the design of the busbars depends on the design of the interconnected battery cells and, in the case of interconnected battery submodules, on the specific *XsYp-* or XpYs-configuration of the battery module.

Manifold designs for such busbars are known from the prior art, some of which take into account further aspects such as e.g. the integration of shunt resistors in the busbars or cell swelling compensation during the operation of the battery module. However, common busbars according to the prior art are often simple bar-shaped aluminum strips allowing solely for more simple battery module configurations or comprise a complex three-dimensional shape that contributes significantly to the overall height of the battery module.

DE 10 2010 019 708 A1 discloses a connector for connecting battery cells that comprises a first connection portion, a second connection portion and a flexible middle portion that is connecting the connection portions and that comprises at least one bridge portion which is connected to the connection portions via side edges. DE 10 2012 204 591 A1 discloses a connection element for connecting electric components of an energy storage device, wherein the connection element comprises a flexible middle portion that shall compensate for swelling and shrinking of cells of the energy storage device. US 2010/0021810 A1 discloses with a connector used to interconnect multiple battery packs. WO 2017/054186 A1 discloses a connector comprising contact portions and connection segments extending perpendicularly from the contact portions and forming an arched connection between the contact portions.

It is thus an object of the present invention to overcome or reduce at least some of the drawbacks of the prior art and to provide a busbar for a battery module that allows for reducing mechanical stress within a battery module as well as for a compact size thereof.

### Summary of Invention

One or more of the drawbacks of the prior art could be avoided or at least reduced by means of the present invention. In particular, a busbar is provided that is configured for electrically connecting cell terminals of at least two battery cells of a battery module. Therein, the busbar comprises a first contact portion that is configured to connect to a first cell terminal, a second contact portion that is configured to connect to a second cell terminal and an arced portion that is configured to connect the first contact portion and the second contact portion. Therein, the arced portion refers to a portion forming an arc, particularly to a portion forming an arc between the first contact portion and the second contact portion. The contact portions extend in a first plane and the arced portion extends in a second plane essentially perpendicular to the first plane. Each of the contact portions and the arced portions is of essentially planar shape, i.e., has an extension in one dimension significantly smaller than its extensions in the remaining two dimensions. Further, the direction of the significantly smaller extension of the contact portions is perpendicular to the direction of the significantly smaller extension of the arced portion. If the contact portions are laid flat, the arced portion stands upright.

A first bent portion extends from the first contact portion into the second plane and connects the first contact portion and the arced portion. Further, a second bent portion extends from the second contact portion in the second plane and connects the second contact portion and the arced portion. Therein, each bent portion provides a transition between the respective contact portion and the arced portion. Further preferred, the arced portion is configured for allowing a relative movement of the first contact portion and the second contact portion, e.g., provided by a deformation of the arced portion. In other words, the plasticity of the arced portion is preferably such that a relative movement of the first and the second contact portion occurs in response to a mechanical load applied thereto, wherein the mechanical load preferably is less than a maximum strain for the arced portion. That is, the plasticity of the arced portion is such that it allows said relative movement without damage (breakage) of the arced portion. Further, said deformation of the arced portion may be elastically or plastically.

The busbar of the present invention thus advantageously allows for small contractions or expansions of the battery cells of the battery module caused by e.g., temperature increase of the cells, charging of the cells and/or ageing of the cells. Particularly, the busbar of the invention comprises the arced portion as expansion joint which points in a direction parallel to the main busbar plane. Therein, the main busbar plane is preferably plane-parallel to the plane of the cell terminals of the battery cells of the battery module. In other words, the arced portion of the busbar of the invention acts as expansion joint and points sideways from the cell terminals. As the arced portion's plasticity usually depends on the arced portion"s extension, i.e., the size of the arc's legs, the arced portion of the invention can be configured to allow for a larger expansion and contraction of the battery cells by setting the deformability of the arced portion to be high without significantly contributing to a battery module's height. In other words, the busbar of the invention advantageously decouples the mechanical properties of the busbar and the height of a battery module comprising the busbar.

According to a the present invention, the first contact portion and the second contact portion are spaced apart in a first direction. Preferably, the first contact portion and the second contact portion are spaced apart in the first direction with a distance that corresponds to the distance, in the first direction, between cell terminals that are to be connected via the busbar. In other words, the first direction corresponds to the direction between cell terminals of adjacent battery cells, i.e., usually the lengthwise or stacking direction of a battery module. The arced portion of the busbar comprises a first section that extends from the first bent portion in a second direction that is essentially perpendicular to the first direction. Further, the busbar comprises a second section that extends from the second bent portion in the second direction. A third section of the busbar connects the first section and the second section and is extending in the first direction.

In other words, the first section and the second section form the legs of the arced portion, respectively, and the third section mechanically and electrically connects the busbar's legs. Preferably, the third section is connected to free terminal ends of the first and second section, respectively, i.e., to ends opposite to the first and second section's connection to the respective bent portion. Each of the first, second and third section may be straight in itself, i.e., the arced portion may be of an arc shape solely due to the combination of the first, second and third sections (U-shape). Alternatively, each or some of the first, second and third section may have an arced shape itself or may have another bent shape itself. The plasticity of the arced portion may be provided by allowing for relative movement of the first and second sections relative to the third section and or by allowing for deformation of the third section previous to a deformation of the first section and/or the second section.

Further preferred in the busbar of the present invention the contact portions, the bent portions and the arced portion form a monolithic unit. In other words, the busbar of the present invention preferably forms a single piece, preferably a single piece of a conductive metal, such as e.g., aluminum. Therein, each of the first contact portion, the second contact portion and the at least one arced portion may be of essentially strip shape or bar shape. Preferably, each contact portion is of planar shape extending in a first plane, i.e., the plane of the cell terminals of a battery module. Then, a strip-shaped arced portion is contacting the contact portions, wherein the arc of the arced portion extends in parallel to the first plane and the strip of the arced portion extends perpendicularly to the first plane. Therein, an extension of the arced portion in a direction perpendicular to the first plane, particularly preferred in a third direction that is perpendicular to the first and second direction, exceeds the extension of the arced portion in a direction within the first plane, and particularly exceeds the extension of the first and second section in the first direction and exceeds the extension of the third section in the second direction. In the context of the present application, the first direction and the second direction span the first plane and the third direction and one of the first direction and the second direction span the second plane.

According to a further preferred embodiment, each of the first bent portion and the second bent portion extends along the respective contact portion either in the first direction or in the second direction. In other words, if the respective bent portion extends in the second direction it may prolong the respective first section or second section. However, also if the first bent portion or the second bent portion extends in the first direction it forms a monolithic unit with the respective first section or second section. In other words, each bent portion segues into the arced portion, particularly in the respective first or second section thereof. The bent portions thus allow for a monolithic connection between the arced portion and the contact portions as they are bent upward from the contact portions and segues into the arc. The extension direction of the bent portion may depend on the amount of arced portions connecting the contact portions as described specifically and in more detail below.

According to another preferred embodiment, each of the first contact portion and the second contact portion is configured to be connected to a cell terminal of the battery module in a plane-parallel manner. In other words, each of the first contact portion and the second contact portion preferably forms a straight and level surface, the entire surface area of which can be laid flat upon the contact surface of a cell terminal, particularly preferred upon a straight and level contact surface of a cell terminal. Also preferred, shape and dimension of the first contact portion and the second contact portion are fitted to shape and dimension of cell terminals of the battery module. In detail, the shape and dimension of the first contact portion is fitted to shape and dimension of a first cell terminal and shape and dimension of the second contact portion is fitted to shape and dimension of a second cell terminal. Hence, the whole surface area of the contact portions contributes to an electric contact between the cell terminals and the busbar and thus contact resistance of the busbar can be decreased.

Further preferred, the height of the arced portion in the second plane, i.e., the extension of the arced portion in the third direction perpendicular to the first and second direction, respectively, is less than the extension of the first and second contact portion in the first direction and is less than the extension of the first and second contact portion in the second direction. Therein, the third direction preferably is the height direction of the battery module. For conventional busbar designs having an expansion joint realized by a bow which points perpendicular to the main busbar plane, the height of the busbar increases the height of the battery module. Hence, if the bow is small, the busbar is quite stiff and does not allow for a large expansion and contraction. Hence, by limiting the arced portion's extension in the third direction, the height of the battery module is limited. As the plasticity of the arced portion is determined by the shape and strength of the first to third sections, e.g., by the extension of the first and second section in the second direction, it is independent of the module height.

Further preferred, the height of each of the bent portions in the second plane, i.e., the extension of each of the bent portions in the third direction perpendicular to the first and second direction, respectively, is less than the extension of the first and second contact portion in the first direction and is less than the extension of the first and second contact portion in the second direction. Particularly preferred, the height of the bent portions, i.e. their extension in the third direction, equals the height of the arced portion. Hence, the bent portions segues into the arced portion without forming a stepped portion. As in the busbar of the invention, the bent portions extend in the third direction, limiting their extension does also advantageously limit the height of the battery module as a whole.

According to a particularly preferred embodiment, the height of the third section in the second plane, i.e. the extension of the third section in the third direction, is less than the height of the first section and/or the second section in the second plane, i.e., less than their extension in the third direction. By reducing the height of the third section the strength of the third section is reduced compared to the strength of the first section and the second section and thus the third section deforms before the first section and the second sections deforms. Hence, a compression force on the cells advantageously does not translate to a torque on the cell pads, e.g., via the first section and first contact portion or the second section and second contact portion, respectively. Alternatively or additionally, the strength of the third section may be reduced in comparison to the first section and/or the second section in a different manner, i.e. by providing it with a reduced thickness, i.e. a reduced extension in the second direction, compared to the thickness of the first and second section, i.e., their extension in the first direction, or by providing it with a different material or composition.

According to another particularly preferred embodiment, the busbar of the invention comprises a first arced portion that connects the first contact portion and the second contact portion and further comprises a second arced portion that connects the first contact portion and the second contact portion. Therein, the first bent portion connects the first contact portion and the first arced portion and the second bent portion connects the second contact portion and the first arced portion. The busbar of this embodiment further comprises a third bent portion and a fourth bent portion. Therein, the third bent portion extends from the first contact portion into the second plane, i.e. into the third direction, and connects the first contact portion and the second arced portion. Further, the fourth bent portion extends from the second contact portion in the second plane, i.e., into the third direction, and connects the second contact portion and the second arced portion. Further preferred, each of the first, second, third and fourth arced portion extend essentially parallel to each other. Providing multiple arced portions connecting the first and second contact portion allows increasing the maximum current to be transported between the contact portions, while maintaining the stiffness of the busbar low in order to allow for compensating cell swelling.

Particularly preferred, each of the first to fourth bent portions extends along the respective contact portion in the first direction. In other words, the first and third bent portions extend in parallel along the first contact portion and in the first direction. Further, the second and fourth bent portions extend in parallel along the second contact portion and in the first direction. Then, the second arced portion is at least partially disposed between the first contact portion and the second contact portion, whereas the first arced portion is preferably not disposed between the first contact portion and the second contact portion. Further preferred, an extension of the first arced portion in the second direction, particularly the extension of the first and second sections of the first arced portion in the second direction, equals the extension of the second arced portion in the second direction, particularly the extension of the first and second sections of the second arced portion in the second direction. This allows advantageously producing the busbar having two arced portions from a single sheet metal.

In a further preferred embodiment, the second arced portion is disposed within the arc of the first arced portion. Thus, the lateral extension of the busbar is preferably not increased by providing the second arced portion, while the mechanical stability of the busbar and its current transport capabilities are increased. Further preferred, the height of the third section of the first arced portion in the second plane, i.e. the extension of the third section of the first arced portion in the third direction, is less than the height of the third section of the second arced portion in the second plane, i.e. less than the extension of the third section of the second arced portion in the third direction. Hence, the strength of the outer arm is advantageously reduced and optimized in comparison to the inner arm and thus, a compression force on the battery cells does not translate to a torque on the cell terminals.

According to another particularly preferred embodiment, the busbar of the present invention comprises a plurality of first contact portions and a plurality of second contact portions, wherein adjacent contact portions are connected to each other via at least one arced portion. In other words, at least two busbars as described above are connected to each other via at least one arced portion. Thus, another busbar of the invention can be considered to be formed by the two actually connected contact portions of the two connected busbars. Then, within the busbar of the invention comprising a plurality of first contact portions and a plurality of second contact portions, a specific contact portion may be considered a first contact portion with respect to a busbar segment having two contact portions and may be considered a second contact portion with respect to another busbar segment with two contact portions. However, for the skilled person it is obvious how to expand the teaching of the present invention as given above in more detail with respect to a busbar having two contact portions to a busbar having more than two contact portions, particularly having 2*n contact portions.

Particularly preferred, in the embodiment of a busbar having 2*n contact portions, with n being a positive integer, each of the bent portions extends in the first direction, i.e. along the lengthwise direction of the battery module and the busbar. Further preferred, at least one bent portion connects the respective contact portion and two arced portions, wherein the respective bent portion preferably segues into two arced portions. In other words, the bent portion of at least one contact portion, preferably of each contact portion except the two outermost contact portions, is connected to two arced portions, wherein each arced portion connects the contact portion via said bent portion to a respective other contact portion via another bent portion of said respective other contact portion. The busbar of this embodiment having multiple first and second contact portions advantageously allows for battery modules having a (2*n)pYs or Ys(2*n)p configuration, i.e., having at least two battery cells connected in parallel within the battery module and preferably having packs of battery cells connected in series within the battery module, each pack consisting of at least two battery cells connected in parallel. Particularly preferred, the number of contact portions of the busbar equals two times the number of battery cells connected in parallel within the module.

With the busbar of the invention, preferably a busbar for a battery module is provided, wherein the battery module comprises a plurality of battery cells that are aligned in a lengthwise direction of the battery module. With respect to the battery cells and their alignment within the battery module, the battery module may be configured like a battery module of the prior art. The busbar of the present invention may comprise a length in the extension direction that is configured for connecting cell terminals of at least two battery cells of the module. Preferably, the length of the busbar corresponds to at least two times, preferably to at least three times, the extension of a battery cell of the battery module in the lengthwise direction of the battery module. However, the length of the busbar may also correspond to six times (2pXs), nine times (3pXs) or twelve times (4pXs) the extension of a battery cell of the battery module in the lengthwise direction of the battery module.

The busbar of the present invention advantageously allows for a busbar design, wherein an arced portion, i.e., a portion of the busbar that is mainly responsive for providing plasticity, can be at least partially disposed next to the cell terminal. This is achieved by extending the arc of the arced portion in parallel to the first plane, while extending the arced portion itself in a second plane that is essentially perpendicular to a first plane of the cell terminals. Thus, the busbar of the invention allows for a battery module with decreased height. Further, the busbar of the invention provides improved plasticity (deformability), as the legs of the arced portion can pivot to a certain extent around a connection portion to the contact portions and/or the third section. Therein, any deformation of the busbar may be either elastically or plastically. Hence, the flexibility of the busbar is increased compared to conventional busbars and the busbar of the invention allows for compensation of dimensional changes of the battery module, e.g., due to cell swelling, as well as for compensating relative movement between the battery cells of the battery module, e.g., due to mechanical impacts. Hence, by damping mechanical loads due to the bending of at least part of the arced portion, the probability of cracks of the busbar or the like is decreased and thus stability of the battery module is increased. Further, the busbar advantageously reduces the maximum load acting on the cell terminal. Particularly, the busbar of the invention can be deformed in response to any displacement of the cell terminals it is connected to without reaching its breaking point.

Another aspect of the invention relates to a battery module that comprises a plurality of battery cells that are aligned in a lengthwise direction of the battery module. Therein, each battery cell comprises a battery case, a cap assembly placed on the battery case and configured for closing the battery case, a vent opening disposed in the cap assembly and configured to rupture open for emitting vent gases in an abnormal operation condition of the battery cell, and electrical cell terminals. The battery module of the present invention further comprises a plurality of busbars according to the present invention as described above for electrically interconnecting the battery cells, wherein each busbar is electrically connecting at least two battery cells. Particularly, at least one first contact portion of each busbar is electrically connected to a cell terminal of a first polarity and at least one second contact portion of each busbar is electrically connected to a cell terminal of a second polarity.

According to a preferred embodiment of the battery module of the invention, at least one of the busbars extends in the lengthwise direction of the battery module with a spatial extension that corresponds to the spatial extension of at least two battery cells in the lengthwise direction of the battery module (1pYs configuration). In other words, at least one of the busbars has a length in the lengthwise direction of the battery module that is at least the length of two battery cells, i.e. two battery cell casings, in the lengthwise direction of the battery module. Particularly preferred, each of the busbar has a spatial extension in the lengthwise direction of the battery module that corresponds to the spatial extension of at least two battery cells in the lengthwise direction of the battery module. Therein, an extension of each busbar that corresponds to the extension of two battery cell allows for a 1pYs configuration and an extension of each busbar that corresponds to the extension of four battery cell allows for a 2pYs configuration and so forth. Particularly preferred, an extension of each busbar that corresponds to the extension of X battery cells advantageously allows for an (X/2)pYs configuration of the battery module.

In further preferred embodiments of the battery module of the invention, the lengthwise direction of the battery module is the first direction and a width direction of the battery module, e.g., the direction between cell terminals of the same cell, is the second direction. Particularly preferred, the direction from each terminal of a battery cell towards the vent opening of the battery cell is the second direction, i.e., the second direction is always pointing to the center of the battery module in the width direction, irrespective of the position of the busbar at a first polarity cell terminal or at a second polarity cell terminal of that battery cell. Further preferred, the second plane extends in the height direction of the battery module, i.e. the third direction is the height direction of the battery module. Further preferred, the cell terminals of the battery cells extend in the first plane, particularly they are level and straight.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view of a battery module according to the prior art;
- Fig. 2: illustrates a schematic perspective view of a battery module according to the prior art;
- Fig. 3: illustrates a schematic perspective and top view of a busbar according to the prior art;
- Fig. 4: illustrates a schematic perspective view and a top view of a busbar according to a first embodiment:
- Fig. 5: illustrates a schematic perspective view of a battery module according to the first embodiment;
- Fig. 6: illustrates a schematic perspective view and a top view of a busbar according to a second embodiment
- Fig. 7: illustrates a schematic perspective view of a battery module according to the second embodiment;
- Fig. 8: illustrates a schematic perspective view and a top view of a busbar according to a third embodiment; and
- Fig. 9: illustrates a schematic perspective view of a battery module according to the third embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

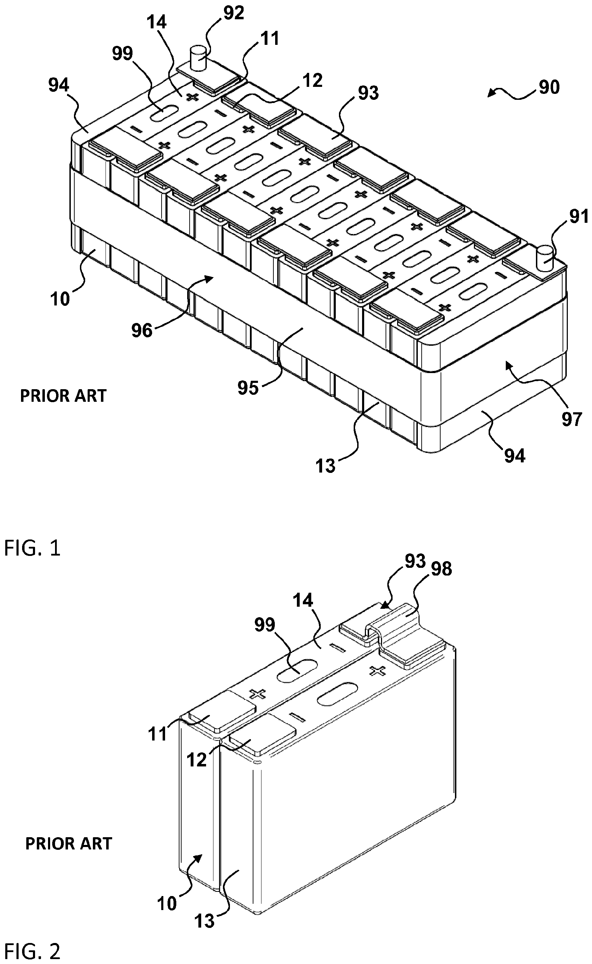

Figure 1 illustrates a battery module 90 according to the prior art comprising twelve prismatic battery cells 10 that are connected in series between a negative first module terminal 91 and a positive second module terminal 92. In other words, the battery module 90 has a 12s1p configuration. Each battery cell 10 has a battery case 13 with a cap assembly 14 placed on the battery case 13, wherein a vent opening 99 is disposed in the cap assembly 14. Within the battery module 90 the battery cells 10 are stacked in a lengthwise direction with their wide side surfaces such that first lateral walls of adjacent battery cells 10 face each other. As a result, the battery module 90 comprises a rectangular shape with a wide module side surface 96 extending in the lengthwise direction and a narrow module side surface 97 extending perpendicular thereto. One positive and one negative electrode terminal 11 and 12 of each pair of neighboring battery cells 10 are electrically connected through a bus bar 93. Spacers 94 are positioned adjacent to the outward facing wide side surface of the outermost battery cells 10 and hence terminate the battery module 90 in the lengthwise direction. A ribbon 95 runs around the battery module 90 and compresses it in the lengthwise direction. The embodiment of Figure 1 shows a most simple design for busbars 93, wherein each busbar 93 is merely a flat strip of sheet metal, i.e., a bar-shaped piece of aluminum.

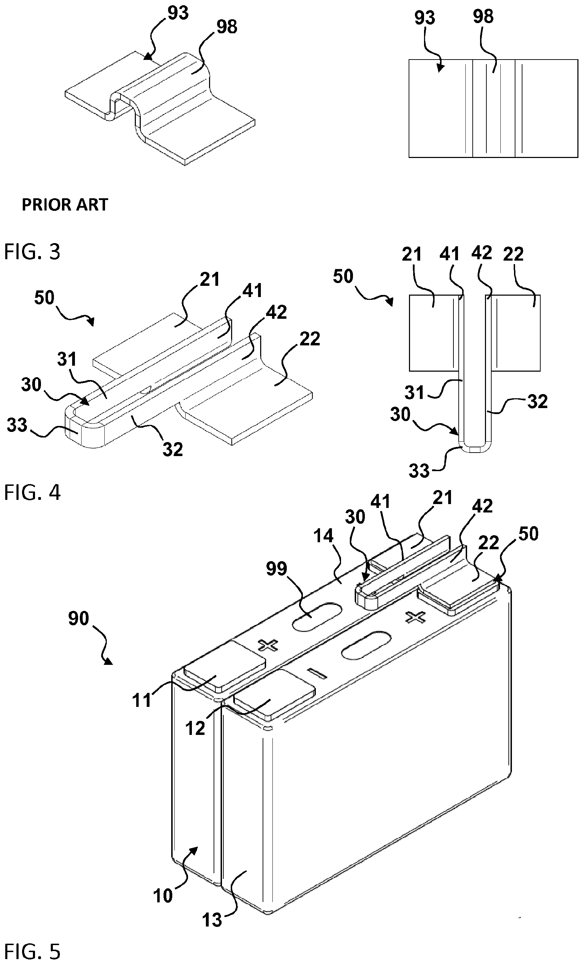

Figures 2 and 3 illustrate another design for the busbar 93 according to the prior art, wherein Figure 2 illustrates the busbar 93 in a section of a battery module 90 as illustrated in Figure 1 and Figure 3 shows a schematic perspective view of the busbar 93 on the left and a schematic top view of the busbar 93 on the right. According to the prior art, the busbar 93 is designed with an expansion joint which is realized by a bow 98 which points perpendicular to the main busbar plane, i.e., that points in a height direction of the battery module 90. Thus, the expansion length of the conventional busbar 93 is limited as the height of the bow 98 increases the height of the battery module 90. Therefore if the bow 98 is small, the busbar 93 is quite stiff and does not allow larger cell expansion and contraction and thus the risk of mechanical, and eventually following electrical, failures is increased in the battery module 90.

Figures 4 and 5 illustrate a design for a busbar 50 according to a first embodiment of the present invention, wherein Figure 4 shows a schematic perspective view of the busbar 50 on the left and a schematic top view of the busbar 50 on the right and wherein Figure 5 illustrates the busbar 50 in a section of a battery module 90 as illustrated in Figure 1. Therein, the busbar 50 of the invention comprises a first contact portion 21 that is fitted and connected to a first cell terminal 11 and a second contact portion 22 that is fitted and connected to a second cell terminal 12. Therein, each contact portion 21, 22 is of planar shape and extends within a first plane and is fitted in shape and dimension to the planar cell terminals 11, 12. A connection can thus be provided by laying down the contact portions 21, 22 on top of the cell terminals 11, 12 and connecting them thereto, e.g. by welding gluing, soldering, or otherwise.

The first contact portion 21 comprises a first bent portion 41 extending therefrom in a second plane, wherein the second plane is essentially perpendicular to the first plane. Particularly, the first plane is plane-parallel to the plane of the first and second cell terminals 11, 12 and the second plane is plane-parallel to the side walls of battery cell casing 13, i.e., extends in a height direction of the battery cells 10 and of the battery module 90. The second contact portion 22 comprises a second bent portion 42 extending therefrom in the second plane. Therein, the first bent portion 41 is monolithic with the first contact portion 21 and the second bent portion 42 is monolithic with the second contact portion 22.

The busbar 50 of the first embodiment further comprises one arced portion 30 that connects the first contact portion 21 and the second contact portion 22 mechanically and electrically. The arced portion 30 extends in a second plane essentially perpendicular to the first plane. That means that the arced portion 30 is also essentially flat, with one dimension being significantly smaller than the other two dimensions, wherein the significantly smaller dimension extends in the first plane and the other two dimensions span the second plane. In other words, the arced portion 30 stands upright and the contact portions 21, 22 lay flat. The first bent portion 41 connects the first contact portion 21 and the arced portion 30 and the second bent portion 42 connects the second contact portion 22 and the arced portion 30. Hence, the contact portions 21, 22, the bent portions 41, 42 and the arced portion 30 form a monolithic unit. The busbar 50 of this embodiment thus provides an arced portion 30, wherein the arc points sideward or lies within the first plane. Hence, the length of the arced portion 30 does not contribute to the height of the battery module 90 and thus the mechanical properties of the busbar 50, i.e., its plasticity, can be set independently of the module height.

Particularly, the arced portion 30 comprises a first section 31 that extends from the first bent portion 41 in a second direction essentially perpendicular from a first direction, wherein the first direction is the direction along which the cell terminals 11, 12 of adjacent cells 10 are displaced to each other. In Figures 4 and 5, the first section 31 segues from the first bent portion 41 in the second direction. Further, the arced portion 30 comprises a second section 32 that extends from the second bent portion 42 in the second direction and segues in the second bent portion 42. The first section 31 and the second section 32 are mechanically and electrically connected by a third section 33 that extends in the first direction. Hence, the combination of the first, second and third sections 31, 32, 33 forms the arc shape of the arced portion 30, wherein the first and second sections 31, 32 forms the legs of the arc. The first embodiment of Figures 4 and 5 allows for a battery module 90 with a busbar 50 having a large arced portion 30 pointing sideways and thus allowing for much larger expansion and contraction of battery cells 10 without increasing the height of the module 90.

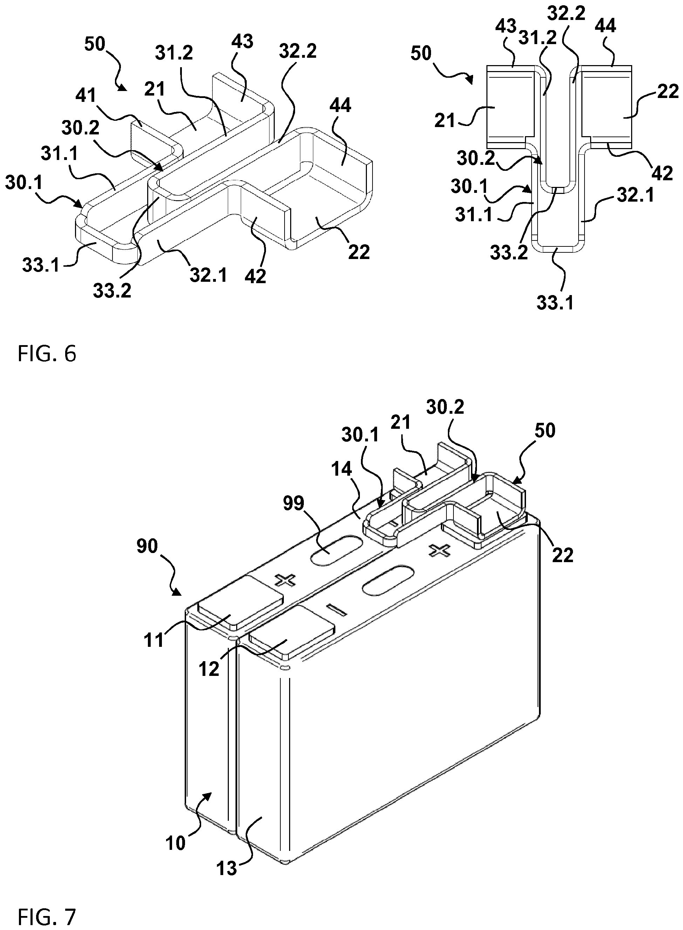

Figures 6 and 7 illustrate a design for a busbar 50 according to a second embodiment of the present invention, wherein Figure 6 shows a schematic perspective view of the busbar 50 on the left and a schematic top view of the busbar 50 on the right and wherein Figure 7 illustrates the busbar 50 in a section of a battery module 90 as illustrated in Figure 1. The busbar 50 of the second embodiment is not described in detail insofar it is equal to the busbar 50 of the first embodiment. However, the busbar 50 of the second embodiment differs from the busbar 50 of the first embodiment in that it comprises two arced portions 30.1, 30.2 connecting the first contact portion 21 and the second contact portion 22 as described before.

Therein, the second arced portion 30.2 is disposed in the arc of the first arced portion 30.1 and both arced portions 30.1, 30.2 comprises respective first, second and third sections 31.1, 31.2, 32.1, 32.2, 33.1, 33.2. Therein, the extension of the first and second sections 31.1, 31.2, 32.1, 32.2 of both arced portions 30.1, 30.2 in the second direction equals each other and the extensions of the third sections 33.1, 33.2 of both arced portions 30.1, 30.2 in the first direction equals each other. Hence, the arced portions 30.1, 30.2 have the same overall shape. Thus, busbar 50 of the second embodiment can also be manufactured from a single sheet metal just as the busbar 50 of the first embodiment. Further, the first bent portion 41 connects the first contact portion 21 and the first arced portion 30.1 and the second bent portion 42 connects the second contact portion 22 and the first arced portion 30.1. Further, a third bent portion 43 extends from the first contact portion 21 into the second plane and connects the first contact portion 21 and the second arced portion 30.2 and a fourth bent portion 44 extends from the second contact portion 22 in the second plane and connects the second contact portion 22 and the second arced portion 30.2. The first to fourth bent portions 41, 42, 43, 44 each extend parallely in the first direction. The first and second arced portion 30.1, 30.2 contact the first and second contact portions 21, 22 solely via the bent portions 41, 42, 43, 44, respectively. The busbar 50 of the second embodiment allows for increasing the mechanical and electrical strength of the connection between the terminals 11, 12 without compromising the height of the battery module 50.

The height of the third section 33.1 of the first arced portion 30.1 is less than the height of the third section 33.2 of the second arced portion 30.2. In other words, an extension of the third section 33.1 of the first arced portion 30.1 in a third direction is less than the extension of the third section 33.2 of the second arced portion 30.2 in the third direction. Therein, the third direction is perpendicular to the first direction and to the second direction and is the height direction of the battery module 90. Hence, the strength of the first arced portion 30.1 is less than the strength of the second arced portion 30.2 and thus the first arced portion 30.1 is deformed first, hence avoiding that a compression on the contact portions 21, 22 translates into a torque acting on the terminals 11, 12.

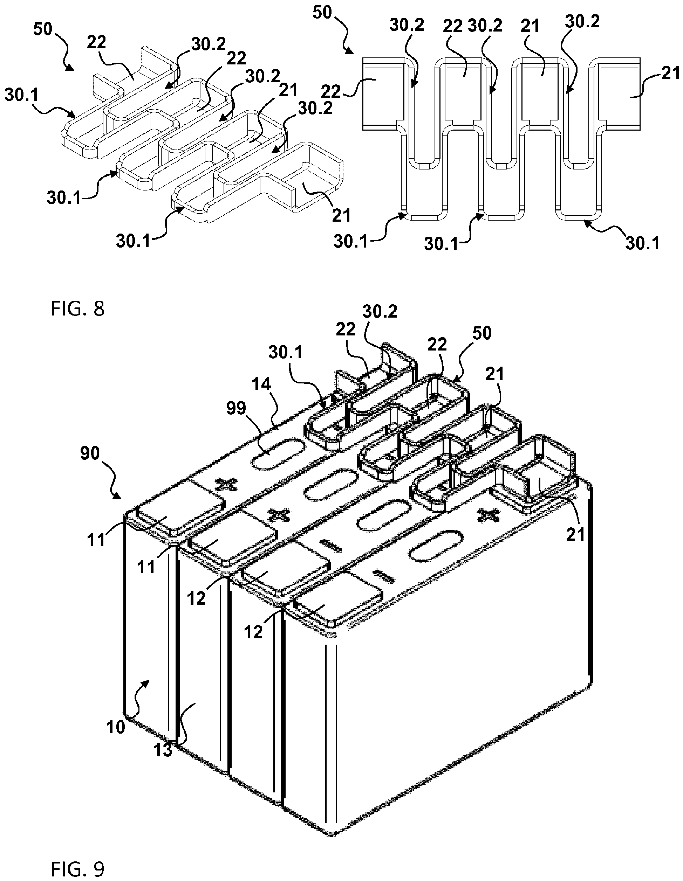

Figures 8 and 9 illustrate a design for a busbar 50 according to a third embodiment of the present invention, wherein Figure 8 shows a schematic perspective view of the busbar 50 on the left and a schematic top view of the busbar 50 on the right and wherein Figure 9 illustrates the busbar 50 in a section of a battery module 90 as illustrated in Figure 1. The busbar 50 of the third embodiment is not described in detail insofar it is equal to the busbars 50 of the first and second embodiment. However, the busbar 50 of the third embodiment differs from the busbar 50 of the first and second embodiment in that it comprises two first contact portions 21 and two second contact portions 22 connected to each other via respective first and second arced portions 30.1, 30.2 as described before.

Therein, two first contact pads 21 are connected to two first cell terminals 11 and two second contact pads 22 are connected to two second cell terminals 12 of the battery module 90 as illustrated in Figure 9. The illustrated section of the battery module 90 has a 2p2s configuration and thus the busbar 50 comprises a total of four contact portions 21, 22. Each of the contact portions 21, 22 is configured to be connected to a single cell terminal 11, 12 and is fitted in shape and dimension to shape and dimension of a single cell terminal 11, 12.

Adjacent contact portions 21, 22 are connected to each other via a first arced portion 30.1 and a second arced portion 30.2, wherein the combination of two adjacent contact portions 21, 22 connected by two arced portions 30.1, 30.2 is configured as described with respect to Figures 6 and 7, irrespective of the designation as first and second contact portion 21, 22. The busbar 50 of the third embodiment is thus the extension of the busbar 50 of the second embodiment for a battery module 90 with a plurality of battery submodules connected in series, wherein each of the battery submodules comprises at least two parallely connected cells 10.

### Reference signs

- 10: battery cells
- 11: positive cell terminal
- 12: negative cell terminal
- 13: battery case
- 14: cap assembly
- 21: first contact portion
- 22: second contact portion
- 30: arced portion
- 30.1: first arced portion
- 30.2: second arced portion
- 31: first section
- 32: second section
- 33: third section
- 41: first bent portion
- 42: second bent portion
- 43: third bent portion
- 44: fourth bent portion
- 50: busbar
- 90: battery module
- 91: negative module terminal
- 92: positive module terminal
- 93: busbar (prior art)
- 94: spacer
- 95: ribbon
- 96: wide module side surface
- 97: narrow module side surface
- 98: bent portion (prior art)
- 99: vent opening

## Claims

1. Busbar (50) for connecting cell terminals (11, 12) of at least two battery cells (10) of a battery module (90), the busbar (50) comprising:
a first contact portion (21) configured to connect to a first cell terminal (11);
a second contact portion (22) configured to connect to a second cell terminal (12) and spaced apart from the first contact portion (21) in a first direction;
an arced portion (30) configured to connect the first contact portion (21) and the second contact portion (22),
wherein the contact portions (21, 22) extend in a first plane and wherein the arced portion (30) extend in a second plane essentially perpendicular to the first plane,
wherein a first bent portion (41) extends from the first contact portion (21) into the second plane and connects the first contact portion (21) and the arced portion (30) and a second bent portion (42) extends from the second contact portion (22) in the second plane and connects the second contact portion (22) and the arced portion (30),
wherein the arced portion (30) comprises a first section (31) extending from the first bent portion (41) in a second direction essentially perpendicular from the first direction, a second section (32) extending from the second bent portion (42) in the second direction, and a third section (33) connecting the first section (31) and the second section (32) and extending in the first direction, and
wherein the arched portion (30) extends over the first contact portion (21) and over the second contact portion (22) in the second direction.

2. Busbar (50) according to claim 1, wherein the contact portions (21, 22), the bent portions (41, 42) and the arced portion (30) form a monolithic unit.

3. Busbar (50) according to claim 1 or 2, wherein each bent portion (41, 42) extends along the respective contact portion (21, 22) either in the first direction or in the second direction and segues into the arced portion (30).

4. Busbar (50) according to any one of the preceding claims,
wherein each of the first (21) and second contact portion (22) is configured to be connected to a cell terminal (11, 12) of the battery module (90) in a plane-parallel manner, and/or
wherein shape and dimension of the first (21) and second contact portion (22) is fitted to shape and dimension of a cell terminal (11, 12) of the battery module (90).

5. Busbar (50) according to any one of the preceding claims, wherein the height of the arced portion (30) and the bent portions (41, 42) in the second plane is less than the extension of the first and second contact portion (21, 22) in the first and second direction.

6. Busbar (50) according to any one of the claims 1 to 5, wherein the height of the third section (33) in the second plane is less than the height of the first section (31) and the second section (32) in the second plane.

7. Busbar (50) according to any one of the preceding claims,
wherein a first arced portion (30.1) and a second arced portion (30.2) connect the first contact portion (21) and the second contact portion (22),
wherein the first bent portion (41) connects the first contact portion (21) and the first arced portion (30.1) and the second bent portion (42) connects the second contact portion (22) and the first arced portion (30.1),
wherein a third bent portion (43) extends from the first contact portion (21) into the second plane and connects the first contact portion (21) and the second arced portion (30.2) and a fourth bent portion (44) extends from the second contact portion (22) in the second plane and connects the second contact portion (22) and the second arced portion (30.2), and
wherein the second arced portion (30.2) is disposed within the arc of the first arced portion (30.1) and wherein the strength of the third section (33.1) of the first arced portion (30.1) is less than the strength of the third section (33.2) of the second arced portion (30.2).

8. Busbar (50) according to claim 7, wherein each of the bent portions (41, 42, 43, 44) extends along the respective contact portion (21, 22) in the first direction.

9. Busbar (50) according to claim 7 or 8, wherein an extension of the first arced portion (30.1) in the second direction equals the extension of the second arced portion (30.2) in the second direction.

10. Busbar (50) according to any one of claims 7 to 9, wherein the second arced portion (30.2) is disposed within the arc of the first arced portion (30.1) and wherein the height of the third section (33.1) of the first arced portion (30.1) in the second plane is less than the height of the third section (33.2) of the second arced portion (30.2) in the second plane.

11. Busbar (50) according to any one of the preceding claims, comprising a plurality of first contact portions (21) and a plurality of second contact portions (22), wherein adjacent contact portions (21, 22) are connected to each other via at least one arced portion (30).

12. Busbar (50) according to claim 11, wherein each bent portion (41, 42, 43, 44) extends in the first direction and wherein at least one bent portion (41, 42, 43, 44) connects the respective contact portion (21, 22) and two arced portions (30).

13. Battery module (90), comprising:
a plurality of battery cells (10) aligned in a lengthwise direction of the battery module (90), each battery cell (10) comprising a battery case (13), a cap assembly (14) placed on the battery case (13), a vent opening (99) and cell terminals (11, 12);
a plurality of busbars (50) according to any one of the claims 1 to 12 for electrically interconnecting the battery cells (10), each busbar (50) electrically connecting at least two battery cells (10),
wherein at least one first contact portion (21) of each busbar (50) is electrically connected to a cell terminal (11) of a first polarity and at least one second contact portion (22) of each busbar (50) is electrically connected to a cell terminal of a second polarity (12).

14. Battery module (90) of claim 13, wherein the lengthwise direction of the battery module (90) is the first direction and the direction of each terminal (11, 12) of a battery cell towards the vent opening (99) of the battery cell (10) is the second direction, wherein the second plane extends in the height direction of the battery module (90) and/or wherein the cell terminals (11, 12) extend in the first plane.

## Patentansprüche

1. Stromschiene (50) zum Verbinden von Zellenanschlüssen (11, 12) von mindestens zwei Batteriezellen (10) eines Batteriemoduls (90), die Stromschiene (50) umfassend:
einen ersten Kontaktabschnitt (21), der so konfiguriert ist, dass er mit einem ersten Zellenanschluss (11) verbunden ist;
einen zweiten Kontaktabschnitt (22), der so konfiguriert ist, dass er mit einem zweiten Zellenanschluss (12) verbunden und in einer ersten Richtung vom ersten Kontaktabschnitt (21) beabstandet ist;
einen bogenförmigen Abschnitt (30), der so konfiguriert ist, dass er den ersten Kontaktabschnitt (21) und den zweiten Kontaktabschnitt (22) verbindet,
wobei sich die Kontaktabschnitte (21, 22) in einer ersten Ebene erstrecken und wobei sich der bogenförmige Abschnitt (30) in einer zweiten Ebene erstreckt, die im Wesentlichen senkrecht zu der ersten Ebene ist,
wobei sich ein erster bogenförmiger Abschnitt (41) von dem ersten Kontaktabschnitt (21) in die zweite Ebene erstreckt und den ersten Kontaktabschnitt (21) und den bogenförmigen Abschnitt (30) verbindet und sich ein zweiter bogenförmiger Abschnitt (42) von dem zweiten Kontaktabschnitt (22) in die zweite Ebene erstreckt und den zweiten Kontaktabschnitt (22) und den bogenförmigen Abschnitt (30) verbindet,
wobei der bogenförmige Abschnitt (30) einen ersten Abschnitt (31) umfasst, der sich von dem ersten bogenförmigen Abschnitt (41) in einer zweiten Richtung im Wesentlichen senkrecht zu der ersten Richtung erstreckt, einen zweiten Abschnitt (32) umfasst, der sich von dem zweiten bogenförmigen Abschnitt (42) in der zweiten Richtung erstreckt, und einen dritten Abschnitt (33) umfasst, der den ersten Abschnitt (31) und den zweiten Abschnitt (32) verbindet und sich in der ersten Richtung erstreckt, und
wobei sich der bogenförmige Abschnitt (30) über den ersten Kontaktabschnitt (21) und über den zweiten Kontaktabschnitt (22) in der zweiten Richtung erstreckt.

2. Stromschiene (50) nach Anspruch 1, wobei die Kontaktabschnitte (21, 22), die bogenförmigen Abschnitte (41, 42) und der bogenförmige Abschnitt (30) eine monolithische Einheit bilden.

3. Stromschiene (50) nach Anspruch 1 oder 2, wobei sich jeder bogenförmige Abschnitt (41, 42) entlang des jeweiligen Kontaktabschnitts (21, 22) entweder in der ersten Richtung oder in der zweiten Richtung erstreckt und in den bogenförmigen Abschnitt (30) übergeht.

4. Stromschiene (50) nach einem der vorhergehenden Ansprüche,
wobei sowohl der erste (21) als auch der zweite Kontaktabschnitt (22) so konfiguriert ist, dass er mit einem Zellenanschluss (11, 12) des Batteriemoduls (90) planparallel verbunden ist, und/oder
wobei Form und Abmessung des ersten (21) und zweiten Kontaktabschnitts (22) an Form und Abmessung eines Zellenanschlusses (11, 12) des Batteriemoduls (90) angepasst sind.

5. Stromschiene (50) nach einem der vorhergehenden Ansprüche, wobei die Höhe des bogenförmigen Abschnitts (30) und der bogenförmigen Abschnitte (41, 42) in der zweiten Ebene geringer ist als die Verlängerung des ersten und zweiten Kontaktabschnitts (21, 22) in der ersten und zweiten Richtung.

6. Stromschiene (50) nach einem der Ansprüche 1 bis 5, wobei die Höhe des dritten Abschnitts (33) in der zweiten Ebene geringer ist als die Höhe des ersten Abschnitts (31) und des zweiten Abschnitts (32) in der zweiten Ebene.

7. Stromschiene (50) nach einem der vorhergehenden Ansprüche,
wobei ein erster bogenförmiger Abschnitt (30.1) und ein zweiter bogenförmiger Abschnitt (30.2) den ersten Kontaktabschnitt (21) und den zweiten Kontaktabschnitt (22) verbinden,
wobei der erste bogenförmige Abschnitt (41) den ersten Kontaktabschnitt (21) und den ersten bogenförmigen Abschnitt (30.1) verbindet und der zweite bogenförmige Abschnitt (42) den zweiten Kontaktabschnitt (22) und den ersten bogenförmigen Abschnitt (30.1) verbindet,
wobei sich ein dritter bogenförmiger Abschnitt (43) von dem ersten Kontaktabschnitt (21) in die zweite Ebene erstreckt und den ersten Kontaktabschnitt (21) und den zweiten bogenförmigen Abschnitt (30.2) verbindet und sich ein vierter bogenförmiger Abschnitt (44) von dem zweiten Kontaktabschnitt (22) in die zweite Ebene erstreckt und den zweiten Kontaktabschnitt (22) und den zweiten bogenförmigen Abschnitt (30.2) verbindet,
wobei der zweite bogenförmige Abschnitt (30.2) innerhalb des Bogens des ersten bogenförmigen Abschnitts (30.1) angeordnet ist und wobei die Festigkeit des dritten Abschnitts (33.1) des ersten bogenförmigen Abschnitts (30.1) geringer ist als die Festigkeit des dritten Abschnitts (33.2) des zweiten bogenförmigen Abschnitts (30.2).

8. Stromschiene (50) nach Anspruch 7, wobei sich jeder der gebogenen Abschnitte (41, 42, 43, 44) entlang des jeweiligen Kontaktabschnitts (21, 22) in der ersten Richtung erstreckt.

9. Stromschiene (50) nach Anspruch 7 oder 8, wobei eine Verlängerung des ersten bogenförmigen Abschnitts (30.1) in der zweiten Richtung gleich der Verlängerung des zweiten bogenförmigen Abschnitts (30.2) in der zweiten Richtung ist.

10. Stromschiene (50) nach einem der Ansprüche 7 bis 9, wobei der zweite bogenförmige Abschnitt (30.2) innerhalb des Bogens des ersten bogenförmigen Abschnitts (30.1) angeordnet ist und wobei die Höhe des dritten Abschnitts (33.1) des ersten bogenförmigen Abschnitts (30.1) in der zweiten Ebene geringer ist als die Höhe des dritten Abschnitts (33.2) des zweiten bogenförmigen Abschnitts (30.2) in der zweiten Ebene.

11. Stromschiene (50) nach einem der vorhergehenden Ansprüche, umfassend mehrere erste Kontaktabschnitte (21) und mehrere zweite Kontaktabschnitte (22), wobei benachbarte Kontaktabschnitte (21, 22) über mindestens einen bogenförmigen Abschnitt (30) miteinander verbunden sind.

12. Stromschiene (50) nach Anspruch 11, wobei sich jeder bogenförmige Abschnitt (41, 42, 43, 44) in der ersten Richtung erstreckt und wobei mindestens ein bogenförmiger Abschnitt (41, 42, 43, 44) den jeweiligen Kontaktabschnitt (21, 22) und zwei bogenförmige Abschnitte (30) miteinander verbindet.

13. Batteriemodul (90), umfassend:
mehrere Batteriezellen (10), die in einer Längsrichtung des Batteriemoduls (90) ausgerichtet sind, wobei jede Batteriezelle (10) ein Batteriegehäuse (13), eine auf dem Batteriegehäuse (13) angeordnete Kappenanordnung (14), eine Lüftungsöffnung (99) und Zellenanschlüsse (11, 12) umfasst;
mehrere Stromschienen (50) nach einem der Ansprüche 1 bis 12 zum elektrischen Verbinden der Batteriezellen (10), wobei jede Stromschiene (50) mindestens zwei Batteriezellen (10) elektrisch miteinander verbindet,
wobei mindestens ein erster Kontaktabschnitt (21) jeder Stromschiene (50) elektrisch mit einem Zellenanschluss (11) einer ersten Polarität verbunden ist und mindestens ein zweiter Kontaktabschnitt (22) jeder Stromschiene (50) elektrisch mit einem Zellenanschluss einer zweiten Polarität (12) verbunden ist.

14. Batteriemodul (90) nach Anspruch 13, wobei die Längsrichtung des Batteriemoduls (90) die erste Richtung ist und die Richtung jedes Anschlusses (11, 12) einer Batteriezelle in Richtung der Lüftungsöffnung (99) der Batteriezelle (10) die zweite Richtung ist, wobei sich die zweite Ebene in der Höhenrichtung des Batteriemoduls (90) erstreckt und/oder wobei sich die Zellanschlüsse (11, 12) in der ersten Ebene erstrecken.

## Revendications

1. Barre omnibus (50) pour relier des bornes de cellules (11, 12) d'au moins deux cellules de batterie (10) d'un module de batterie (90), la barre omnibus (50) comprenant :
une première portion de contact (21) configurée pour se relier à une première borne de cellule (11) ;
une deuxième portion de contact (22) configurée pour se relier à une deuxième borne de cellule (12) et espacée de la première portion de contact (21) dans une première direction ;
une portion arquée (30) configurée pour relier la première portion de contact (21) et la deuxième portion de contact (22),
dans laquelle les portions de contact (21, 22) s'étendent dans un premier plan et dans laquelle la portion arquée (30) s'étend dans un deuxième plan sensiblement perpendiculaire au premier plan,
dans laquelle une première portion pliée (41) s'étend depuis la première portion de contact (21) dans le deuxième plan et relie la première portion de contact (21) et la portion arquée (30) et une deuxième portion pliée (42) s'étend de la deuxième portion de contact (22) dans le deuxième plan et relie la deuxième portion de contact (22) et la portion arquée (30),
dans laquelle la portion arquée (30) comprend une première section (31) s'étendant depuis la première portion pliée (41) dans une deuxième direction sensiblement perpendiculaire à la première direction, une deuxième section (32) s'étend depuis la deuxième portion pliée (42) dans la deuxième direction, et une troisième section (33) reliant la première section (31) et la deuxième section (32) et s'étendant dans la première direction, et
dans laquelle la portion arquée (30) s'étend sur la première portion de contact (21) et sur la deuxième portion de contact (22) dans la deuxième direction.

2. Barre omnibus (50) selon la revendication 1, dans laquelle les portions de contact (21, 22), les portions pliées (41, 42) et la portion arquée (30) constituent une unité monolithique.

3. Barre omnibus (50) selon la revendication 1 ou 2, dans laquelle chaque portion pliée (41, 42) s'étend le long de la portion de contact (21, 22) respective dans la première direction ou dans la deuxième direction et débouche dans la portion arquée (30).

4. Barre omnibus (50) selon l'une quelconque des revendications précédentes,
dans laquelle chacune parmi la première portion de contact (21) et la deuxième portion de contact (22) est configurée pour être reliée à une borne de cellule (11, 12) du module de batterie (90) d'une manière parallèle au plan, et/ou
dans laquelle une forme et une dimension de la première portion de contact (21) et de la deuxième portion de contact (22) sont adaptées à une forme et une dimension d'une borne de cellule (11, 12) du module de batterie (90) .

5. Barre omnibus (50) selon l'une quelconque des revendications précédentes, dans laquelle la hauteur de la portion arquée (30) et des portions pliées (41, 42) dans le deuxième plan est inférieure à l'extension des première et deuxième portions de contact (21, 22) dans les première et deuxième directions.

6. Barre omnibus (50) selon l'une quelconque des revendications 1 à 5, dans laquelle la hauteur de la troisième section (33) dans le deuxième plan est inférieure à la hauteur de la première section (31) et de la deuxième section (32) dans le deuxième plan.

7. Barre omnibus (50) selon l'une quelconque des revendications précédentes,
dans laquelle une première portion arquée (30.1) et une deuxième portion arquée (30.2) relient la première portion de contact (21) et la deuxième portion de contact (22),
dans laquelle la première portion pliée (41) relie la première portion de contact (21) et la première portion arquée (30.1) et la deuxième portion pliée (42) relie la deuxième portion de contact (22) et la première portion arquée (30.1),
dans laquelle une troisième portion pliée (43) s'étend depuis la première portion de contact (21) dans le deuxième plan et relie la première portion de contact (21) et la deuxième portion arquée (30.2) et une quatrième portion pliée (44) s'étend depuis la deuxième portion de contact (22) dans le deuxième plan et relie la deuxième portion de contact (22) et la deuxième portion arquée (30.2), et
dans laquelle la deuxième portion arquée (30.2) est disposée à l'intérieur de l'arc de la première portion arquée (30.1) et dans laquelle la force de la troisième section (33.1) de la première portion arquée (30.1) est inférieure à la force de la troisième section (33.2) de la deuxième portion arquée (30.2).

8. Barre omnibus (50) selon la revendication 7, dans laquelle chacune parmi les portions pliées (41, 42, 43, 44) s'étend le long de la portion de contact (21, 22) respective dans la première direction.

9. Barre omnibus (50) selon la revendication 7 ou 8, dans laquelle une extension de la première portion arquée (30.1) dans la deuxième direction est égale à l'extension de la deuxième portion arquée (30.2) dans la deuxième direction.

10. Barre omnibus (50) selon l'une quelconque des revendications 7 à 9, dans laquelle la deuxième portion arquée (30.2) est disposée à l'intérieur de l'arc de la première portion arquée (30.1) et dans laquelle la hauteur de la troisième section (33.1) de la première portion arquée (30.1) dans le deuxième plan est inférieure à la hauteur de la troisième section (33.2) de la deuxième portion arquée (30.2) dans le deuxième plan.

11. Barre omnibus (50) selon l'une quelconque des revendications précédentes, comprenant une pluralité de premières portions de contact (21) et une pluralité de deuxièmes portions de contact (22), dans laquelle des portions de contact (21, 22) adjacentes sont reliées l'une à l'autre par l'intermédiaire d'au moins une portion arquée (30).

12. Barre omnibus (50) selon la revendication 11, dans laquelle chaque portion pliée (41, 42, 43, 44) s'étend dans la première direction et dans laquelle au moins une portion pliée (41, 42, 43, 44) relie la portion de contact (21, 22) respective et deux portions arquées (30) .

13. Module de batterie (90), comprenant :
une pluralité de cellules de batterie (10) alignées dans une direction longitudinale du module de batterie (90), chaque cellule de batterie (10) comprenant un boîtier de batterie (13), un ensemble de recouvrement (14) placé sur le boîtier de batterie (13), une ouverture d'évacuation (99) et des bornes de cellules (11, 12) ;
une pluralité de barres omnibus (50) selon l'une quelconque des revendications 1 à 12 pour interconnecter électriquement les cellules de batterie (10), chaque barre omnibus (50) reliant électriquement au moins deux cellules de batterie (10),
dans lequel au moins une première portion de contact (21) de chaque barre omnibus (50) est reliée électriquement à une borne de cellule (11) d'une première polarité et au moins une deuxième portion de contact (22) de chaque barre omnibus (50) est reliée électriquement à une borne de cellule d'une deuxième polarité (12).

14. Module de batterie (90) selon la revendication 13, dans lequel la direction longitudinale du module de batterie (90) est la première direction et la direction de chaque borne (11, 12) d'une cellule de batterie vers l'ouverture d'évacuation (99) de la cellule de batterie (10) est la deuxième direction, dans lequel le deuxième plan s'étend dans la direction de hauteur du module de batterie (90) et/ou dans lequel les bornes de cellules (11, 12) s'étendent dans le premier plan.
